# EUROPÄISCHE PATENTANMELDUNG

(11) **EP 4 491 004 A1**
(43) Veröffentlichungstag der Anmeldung: **15.01.2025**
(21) Anmeldenummer: 23185078.5
(22) Anmeldetag: 12.07.2023
(51) Int. Cl.: A01D 34/67, A01D 34/71, A01D 34/82

(54) **MOTORBETRIEBENER RASENMÄHER UND MÄHERGEHÄUSEVERWENDUNG**

(71) Anmelder: Andreas Stihl AG & Co. KG, 71336 Waiblingen (DE)
(72) Erfinder: SANDBICHLER, Christian, 6336 Langkampfen (AT); GASSNER, Markus, 6345 Kössen (AT); HÖRFARTER, Kurt, 6342 Niederndorf (AT); HOFER, Manfred, 6364 Brixen im Thale (AT); WIEST, Walter, 6335 Thiersee (AT); WOHNLICH, Clara, 83080 Oberaudorf (DE)
(74) Vertreter: Patentanwälte Ruff, Wilhelm, Beier, Dauster & Partner mbB

(57) **Zusammenfassung**

2.1. Die Erfindung bezieht sich auf einen motorbetriebener Rasenmäher mit einem Antriebsmotor (1), der eine Antriebswelle (1a) aufweist, einem vom Antriebsmotor antreibbaren, beweglichen Schneidwerkzeug (2) und einem Mähergehäuse (3) mit einem haubenförmigen Mähdeck (3a), das zu einer Mähseite (4) hin offen ist und innerhalb dessen das Schneidwerkzeug angeordnet ist, wobei das Mähergehäuse zur Verwendung mit einem motorbetriebenen Rasenmäher mit einem Verbrennungsmotor als Antriebsmotor eingerichtet ist, indem im Mähergehäuse außerhalb des Mähdecks ein Riemenraum (5) vorgesehen ist, der zur Aufnahme eines mit einer Antriebswelle des Verbrennungsmotors verbundenen Antriebsriemens eingerichtet ist. Weiter bezieht sich die Erfindung auf die Verwendung eines Mähergehäuses für einen Rasenmäher.

2.2. Erfindungsgemäß ist der Antriebsmotor ein Elektromotor, und im Mähergehäuse (3) ist eine Kühlluftführung (6) mit einem Lufteinlass (6a), einem Luftauslass (6b) und einem Luftführungsweg (6c) vom Lufteinlass (6a) zum Luftauslass (6b) gebildet. Im Luftführungsweg (6c) ist ein vom Elektromotor (1) antreibbares Gebläse (7) angeordnet, und der Riemenraum (5) ist zur Bildung eines Teils des Luftführungsweges (6c) eingerichtet.

2.3. Verwendung z.B. für selbstfahrende, handgeführte Rasenmäher.

## Beschreibung

Die Erfindung bezieht sich auf einen motorbetriebenen Rasenmäher mit einem Antriebsmotor, einem vom Antriebsmotor antreibbaren, beweglichen Schneidwerkzeug, einem Mähergehäuse mit einem haubenförmigen Mähdeck, das zu einer Mähseite hin offen ist und innerhalb dessen das Schneidwerkzeug angeordnet ist, wobei das Mähergehäuse zur Verwendung mit einem motorbetriebenen Rasenmäher mit einem Verbrennungsmotor als Antriebsmotor eingerichtet ist, indem im Mähergehäuse außerhalb des Mähdecks ein Riemenraum vorgesehen ist, der zur Aufnahme eines mit einer Antriebswelle des Verbrennungsmotors verbundenen Antriebsriemens eingerichtet ist. Weiter bezieht sich die Erfindung auf die Verwendung eines Mähergehäuses für einen Rasenmäher.

Mit seiner offenen Mähseite ist das Mähdeck und damit der Rasenmäher insgesamt im Betrieb einer zu mähenden Fläche, wie einer Rasenfläche, zugewandt, d.h. üblicherweise weist die offene Mähseite im Betrieb des Mähers nach unten. Die Haubenform des Mähdecks kanalisiert das gemähte Schnittgut, wozu es meist einen zugehörigen Mähkanal bildet, und verhindert insbesondere, dass dieses nach oben in das Mähergehäuse eindringt oder, verursacht durch die schnelle Schnittbewegung des Schneidwerkzeugs, meist eine Rotationsbewegung, mit hoher Geschwindigkeit seitlich nach außen geschleudert wird.

Motorbetriebene Rasenmäher dieser Art, bei denen als Antriebsmotor ein Verbrennungsmotor verwendet wird, sind in diversen Ausführungen bekannt und werden von der Anmelderin auf dem Markt angeboten. Für einen selbstfahrenden, d.h. einen motorischen Fahrantrieb aufweisenden, Typ solcher Rasenmäher ist es des Weiteren bekannt, den Antriebsmotor außer als Antrieb für das Schneidwerkzeug zusätzlich als Antrieb für ein oder mehrere Räder des Mähers zu benutzen und hierzu eine hinterradseitige oder vorderradseitige Radantriebseinheit bzw. Radantriebsgetriebeeinheit über einen Antriebsriemen, wie einen Keilriemen, an die Antriebswelle des Verbrennungsmotors anzukoppeln. Der Antriebsriemen ist in einem Riemenraum aufgenommen, der zu diesem Zweck im Mähergehäuse gebildet ist, das an seiner Unterseite das haubenförmige Mähdeck aufweist, in dem das Schneidwerkzeug angeordnet ist. Der Riemenraum ist außerhalb des Mähdecks gebildet, d.h. separiert von der nach außen bzw. unten offenen Mähseite des Mähdecks, was einer übermäßigen Verschmutzung des Riemenraums bzw. des Antriebsriemens vorbeugt.

Anstelle solcher Rasenmäher mit Verbrennungsmotor werden in den letzten Jahren vermehrt motorbetriebene Rasenmäher mit Elektromotor als Antriebsmotor verwendet. Üblicherweise bedarf dieser Elektromotor einer Kühlung, weshalb es hierfür bekannt ist, im Mähergehäuse eine Kühlluftführung mit einem Lufteinlass, einem Luftauslass und einem Luftführungsweg vom Lufteinlass zum Luftauslass vorzusehen und im Luftführungsweg ein vom Elektromotor antreibbares Gebläse anzuordnen. Das Gebläse erzeugt einen Kühlluftstrom durch den Luftführungsweg hindurch, in dem sich u.a. der zu kühlende Elektromotor bzw. zu kühlende Komponenten desselben befinden. Im kühlluftumströmten Bereich können zudem Elektronikkomponenten für den Mähmotor, d.h. den Antriebsmotor des Schneidwerkzeugs, und für einen Fahrantrieb untergebracht sein. Verschiedene derartige Rasenmäher mit Elektromotor als Antriebsmotor und zugeordneter Luftkühlung sind in den Offenlegungsschriften EP 3 673 722 A1, EP 3 659 420 A1 und CN 108142103 A offenbart.

Der Erfindung liegt als technisches Problem die Bereitstellung eines motorbetriebenen Rasenmähers der eingangs genannten Art, der gegenüber dem oben erwähnten Stand der Technik weitergehend verbessert ist und insbesondere eine vorteilhafte Mehrfachnutzung bzw. Gleichteilenutzung einer Mäherkomponente für unterschiedliche Rasenmäherausführungen ermöglicht, und einer Verwendung eines zugehörigen Mähergehäuses zugrunde

Die Erfindung löst dieses Problem durch die Bereitstellung eines motorbetriebenen Rasenmähers mit den Merkmalen des Anspruchs 1 und einer Verwendung eines Mähergehäuses mit den Merkmalen des Anspruchs 10. Vorteilhafte Weiterbildungen der Erfindung sind Gegenstand der Unteransprüche, deren Wortlaut hiermit durch Verweis zum Bestandteil der Beschreibung gemacht wird. Dies schließt insbesondere auch alle Ausführungsformen der Erfindung ein, die sich aus den Merkmalskombinationen ergeben, die durch die Rückbezüge in den Unteransprüchen definiert sind.

Erfindungsgemäß weist der Rasenmäher als Antriebsmotor einen Elektromotor auf, und im Mähergehäuse ist eine Kühlluftführung mit einem Lufteinlass, einem Luftauslass und einem Luftführungsweg vom Lufteinlass zum Luftauslass gebildet, wobei im Luftführungsweg ein vom Elektromotor antreibbares Gebläse angeordnet ist und der Riemenraum zur Bildung eines Teils des Luftführungsweges eingerichtet ist.

Bei dem erfindungsgemäßen Rasenmäher erfüllt folglich der Riemenraum eine Luftführungsfunktion als Teil des Luftführungsweges einer Kühlluftführung, wobei die Kühlluft insbesondere zur Kühlung des Elektromotors dienen kann, der als Antriebsmotor für das Schneidwerkzeug fungiert. Optional können zudem Elektronikkomponenten z.B. für den Mähmotor und/oder einen Fahrantrieb im kühlluftumströmten Bereich untergebracht sein. Aufgrund seines vorhandenen Riemenraums kann das Mähergehäuse auch für einen nicht erfindungsgemäßen Rasenmäher verwendet werden, der einen Verbrennungsmotor als Antriebsmotor für das Schneidwerkzeug besitzt und bei dem der Riemenraum zur Aufnahme eines Antriebsriemens dient, mit dem z.B. eine Radantriebseinheit bzw. Radantriebsgetriebeeinheit zwecks motorischem Antrieb einer oder mehrerer Räder des Rasenmähers oder eine andere motorisch anzutreibende Komponente des Mähers an die Antriebswelle des Verbrennungsmotors angekoppelt, d.h. mit dieser Antriebswelle verbunden, ist.

Somit ergibt sich in vorteilhafter Weise eine Mehrfachnutzung für das Mähergehäuse und den in ihm außerhalb des Mähdecks gebildeten Riemenraum. In nicht erfindungsgemäßen Mäherausführungen mit Verbrennungsmotor dient der Riemenraum des Mähergehäuses wie üblich zur Aufnahme des Antriebsriemens für den Radantrieb oder für einen anderen Antrieb, in erfindungsgemäßen Ausführungen des Rasenmähers mit Elektromotor dient der Riemenraum als Teil des Luftführungsweges der Kühlluftführung, mit der Kühlluft insbesondere über den Elektromotor bzw. zu kühlende Komponenten desselben geführt werden kann.

Das Mähergehäuse mit dem in ihm gebildeten Riemenraum kann daher vollständig oder jedenfalls im Wesentlichen unverändert, d.h. baugleich, für Rasenmäherausführungen mit Verbrennungsmotor bzw. mit Elektromotor unabhängig davon verwendet werden, ob der betreffende Rasenmäher mit dem Verbrennungsmotor oder dem Elektromotor als Antriebsmotor bestückt ist. Dies stellt eine vorteilhafte Gleichteilenutzbarkeit für das Mähergehäuse dar.

Da der Riemenraum im Mähergehäuse außerhalb des Mähdecks gebildet ist, kann durch ihn die Kühlluft außerhalb des Mähdecks geführt werden. Damit lässt sich eine Verbindung des Luftführungsweges mit dem vom haubenförmigen Mähdeck umgrenzten Raum vermeiden, in welchem sich das Schneidwerkzeug befindet und im aktiven Mäherbetrieb das gemähte Schnittgut anfällt. Eine solche Verbindung des Luftführungsweges für die Kühlluft mit diesem vom haubenförmigen Mähdeck umgrenzten, aktiven Mähraum, auch Mähkanal bezeichnet, ist in aller Regel aus Gründen der Schmutzanfälligkeit und der Luftdruckverhältnisse im aktiven Betrieb des typischerweise rotierend betätigten Schneidwerkzeugs unerwünscht.

In einer Weiterbildung der Erfindung erstreckt sich der Riemenraum von einem Antriebswellenbereich des Mähergehäuses zu einem Radantriebsbereich des Mähergehäuses. Damit kann der Riemenraum insbesondere zur Aufnahme eines Antriebsriemens zum Antreiben eines oder mehrerer Räder, wie der Hinterräder oder der Vorderräder, des Rasenmähers dienen, wenn der Rasenmäher mit dem Verbrennungsmotor bestückt ist, während der Riemenraum im Fall des mit dem Elektromotor ausgerüsteten Rasenmähers vorteilhaft eine Führung von Kühlluft vom Bereich der Antriebswelle des Elektromotors im Mähergehäuse bis zu dem Radantriebsbereich des Mähergehäuses ermöglicht.

Ein Abführen der Kühlluft oder alternativ ein Ansaugen der Kühlluft in diesem Radantriebsbereich des Mähergehäuses ist in vielen Fällen hinsichtlich der Führung der Kühlluft vorteilhaft. Des Weiteren kann je nach Bedarf im Radantriebsbereich eine Kühlung einer oder mehrerer dort befindlicher Komponenten, wie eines dort angeordneten Radantriebsgetriebes oder eines dort angeordneten, separaten, elektrischen Radantriebsmotors, durch die Kühlluft erfolgen. In alternativen Ausführungen, bei denen mit dem Antriebsriemen kein Rad, sondern eine andere Mäherkomponente durch den Antriebsmotor angetrieben werden soll, kann sich der Riemenraum vom Antriebswellenbereich des Mähergehäuses zu einem anderen Bereich des Mähergehäuses erstrecken, wenn der Rasenmäher mit dem Verbrennungsmotor bestückt ist.

In einer Weiterbildung der Erfindung erstreckt sich der Riemenraum im Wesentlichen parallel zu einer Rotationsebene des Schneidwerkzeugs. Dementsprechend wird in diesem Fall die Kühlluft im Riemenraum ebenfalls im Wesentlichen parallel zur Rotationsebene des Schneidwerkzeugs geführt, d.h. senkrecht zur Rotationsachse des Schneidwerkzeugs und damit im Allgemeinen auch im Wesentlichen senkrecht zur Antriebswelle des Elektromotors. Die Kühlluft kann daher beispielsweise über den Elektromotor hinweg und anschließend durch den Riemenraum hindurch vom Bereich des Elektromotors bzw. seiner Antriebswelle radial nach außen weggeführt werden. In alternativen Ausführungen erstreckt sich der Riemenraum mit einem merklichen Schrägwinkel geneigt zur Rotationsebene des Schneidwerkzeugs, oder es wird ein nichtrotatorisch angetriebenes Schneidwerkzeug verwendet.

In einer Weiterbildung der Erfindung erstreckt sich der Riemenraum angrenzend an eine Haubendachseite des Mähdecks. Damit kann die Kühlluft durch den Riemenraum hindurch direkt über dem Mähdeck und separiert von dessen haubenförmig umgrenzter, nach außen hin offener Mähseite im Mähergehäuse geführt werden. In alternativen Ausführungen erstreckt sich der Riemenraum mit z.B. vertikalem Abstand vom Mähdeck bzw. von dessen Haubendachseite.

In einer Weiterbildung der Erfindung befinden sich der Lufteinlass und der Luftauslass außerhalb des Mähdecks. Diese Ausführung hat den Vorteil, dass weder der Lufteinlass noch der Luftauslass in die vom Mähdeck habenförmig umgrenzte, offene Mähseite münden. Dies erleichtert eine vom gemähten Schnittgut und den Luftdruckverhältnissen auf der offenen Mähseite des Mähdecks im aktiven Mäherbetrieb unabhängige Führung der Kühlluft. In alternativen Ausführungen kann sich der Lufteinlass und/oder der Luftauslass am Mähdeck befinden, wenn dies für entsprechende Anwendungsfälle nutzbringend ist.

In einer Weiterbildung der Erfindung befindet sich der Lufteinlass an einem oberen Bereich des Mähergehäuses. Diese Ausführung ist für viele Anwendungen von Vorteil, da sich der Lufteinlass in diesem Fall vergleichsweise weit vom schmutzanfälligeren unteren Bereich des Mähergehäuses entfernt befindet, d.h. relativ weit weg vom Mähdeck und dem von ihm umgrenzten Mähraum. In alternativen Ausführungen ist der Lufteinlass an einem anderen Bereich des Mähergehäuses angeordnet, wenn dies für entsprechende Anwendungen Vorteile bietet, z.B. an einem Seitenbereich des Mähergehäuses.

In einer Weiterbildung der Erfindung befindet sich der Luftauslass an einem unteren hinteren oder unteren vorderen Bereich des Mähergehäuses außerhalb des Mähdecks. Dies stellt für zahlreiche Anwendungen eine vorteilhafte Positionierung des Luftauslasses dar. Die Kühlluft kann in diesem Fall unbeeinflusst von den Schmutz- und Luftdruckverhältnissen im Mähdeck bzw. Mähraum aus dem Mähergehäuse relativ bodennah abgeführt werden. Die Positionierung des Luftauslasses an einem unteren Bereich des Mähergehäuses kann z.B. insbesondere in Kombination mit der Positionierung des Lufteinlasses in einem oberen Bereich des Mähergehäuses vorteilhaft sein. Die Positionierung des Luftauslasses im hinteren oder vorderen Bereich des Mähergehäuses bietet sich beispielsweise dann an, wenn sich der Riemenraum in diesen Bereich erstreckt, um im Fall der Verwendung des Verbrennungsmotors als Antriebsmotor einen dort befindlichen Radantrieb durch den Antriebsriemen mit der Verbrennungsmotor-Antriebswelle zu koppeln. In alternativen Ausführungen kann sich der Luftauslass an einem anderen Bereich des Mähergehäuses befinden, wenn dies für entsprechende Anwendungen günstig ist, z.B. an einem oberen oder seitlichen Bereich des Mähergehäuses.

In einer Weiterbildung der Erfindung weist das Mähergehäuse ein am Mähdeck angeordnetes Motorgehäuse auf, in dem der Antriebsmotor angeordnet ist. In diesem Fall befindet sich der Antriebsmotor im Motorgehäuse, das einen gegenüber dem Mähdeck eigenständigen Teil des Mähergehäuses bildet. In einer entsprechenden Realisierung kann das Motorgehäuse lösbar am Mähdeck angebracht sein, so dass es bei Bedarf von diesem abgenommen werden kann. Der Riemenraum befindet sich vorzugsweise am das Mähdeck bildenden Teil des Mähergehäuses, kann sich aber alternativ auch am das Motorgehäuse bildenden Teil des Mähergehäuses befinden, wenn dies für den konkreten Einsatzfall Vorteile bietet. In weiteren alternativen Ausführungen ist das Mähergehäuse nicht in den Mähdeckteil und den Motorgehäuseteil aufgeteilt, sondern anderweitig strukturiert, beispielsweise als ein einheitlicher Gehäusekörper, der in einem unteren Bereich das Mähdeck bildet und in einem darüberliegenden Bereich den Antriebsmotor aufnimmt.

Vorteilhafte Ausführungsformen der Erfindung und eine herkömmliche Ausführungsform sind in den Zeichnungen dargestellt. Diese und weitere vorteilhafte Ausführungsformen der Erfindung werden nachfolgend näher beschrieben. Hierbei zeigen:
- Fig. 1: eine perspektivische Längsschnittansicht eines erfindungsgemäßen motorbetriebenen Rasenmähers mit Elektromotor,
- Fig. 2: eine Horizontal-Querschnittansicht von oben auf den Rasenmäher von Fig. 1,
- Fig. 3: eine Detail-Längsschnittansicht des Rasenmähers von Fig. 1,
- Fig. 4: eine Detail-Querschnittansicht von oben auf den Rasenmäher von Fig. 1,
- Fig. 5: eine Perspektivansicht von unten auf den Rasenmäher von Fig. 1,
- Fig. 6: die Ansicht von Fig. 5 mit abgenommener Riemenraumabdeckung und
- Fig. 7: die Ansicht von Fig. 1 für einen herkömmlichen motorbetriebenen Rasenmäher mit Verbrennungsmotor.

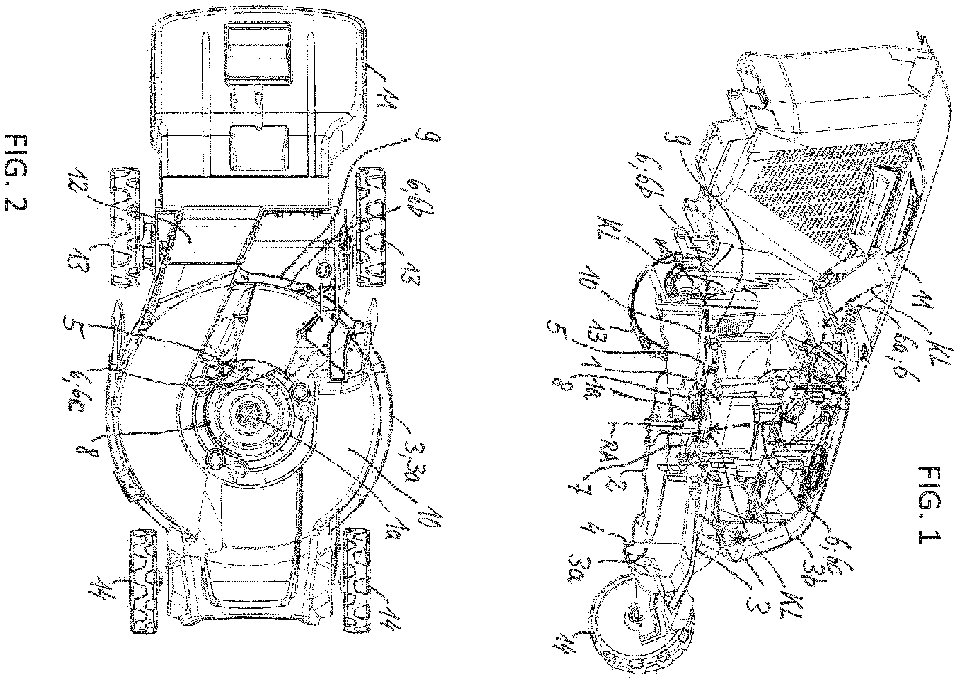

Wie in den Fig. 1 bis 6 anhand eines exemplarischen Ausführungsbeispiels veranschaulicht, umfasst der erfindungsgemäße motorbetriebene Rasenmäher einen Antriebsmotor 1 mit einer Antriebswelle 1a, wobei für den Antriebsmotor 1 ein Elektromotor ist. Hierfür sind Elektromotoren einsetzbar, wie sie dem Fachmann für diesen Anwendungszweck an sich bekannt sind, was hier keiner näheren Erläuterungen bedarf. Des Weiteren beinhaltet der Rasenmäher ein vom Antriebsmotor 1 antreibbares, bewegliches Schneidwerkzeug 2 und ein Mähergehäuse 3 mit einem haubenförmigen Mähdeck 3a, das zu einer Mähseite 4 hin offen ist und innerhalb dessen das Schneidwerkzeug 2 angeordnet ist. Das Schneidwerkzeug 2 kann beispielsweise, wie in der gezeigten Ausführung, ein rotationsbeweglich angeordnetes Schneidwerkzeug sein, wie ein rotierendes Mäh- bzw. Schneidmesser.

Das Mähergehäuse 3 ist zur Verwendung mit einem motorbetriebenen Rasenmäher mit einem Verbrennungsmotor als Antriebsmotor für das Schneidwerkzeug 2 eingerichtet, wobei im Mähergehäuse 3 außerhalb des Mähdecks 3a ein Riemenraum 5 vorgesehen ist, der zur Aufnahme eines bei Verwendung des Verbrennungsmotors als Antriebsmotor mit dessen Antriebswelle verbundenen Antriebsriemens eingerichtet ist.

In den Fig. 1 bis 6 ist der Rasenmäher in der erfindungsgemäßen Ausführung gezeigt, in der er mit dem Elektromotor als Antriebsmotor 1 bestückt ist. In dieser Ausführung fehlt der Antriebsriemen. Dennoch ist der Riemenraum 5 im Mähergehäuse 3 vorhanden, unverändert in der Struktur, in der er den dann vorgesehenen Antriebsriemen aufnimmt, wenn als Antriebsmotor der Verbrennungsmotor benutzt ist.

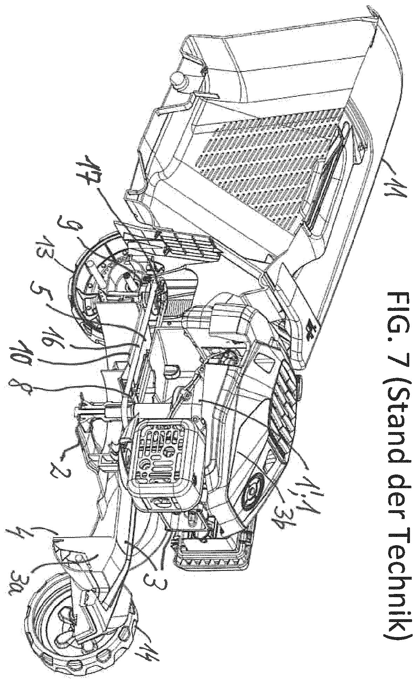

Fig. 7 zeigt in einer der Fig. 1 entsprechenden Ansicht einen herkömmlichen Rasenmäher, der anstelle des Elektromotors beim erfindungsgemäßen Rasenmäher der Fig. 1 bis 6 einen Verbrennungsmotor 1' als Antriebsmotor 1 für das Schneidwerkzeug 2 besitzt und bei dem im Riemenraum 5 ein Antriebsriemen 16 aufgenommen ist, der an die Antriebswelle des Verbrennungsmotors 1' angekoppelt ist. Über den Antriebsriemen 16 kann ein Hinterradantrieb 17 vom Verbrennungsmotor 1' angetrieben werden. Im Übrigen entspricht dieser herkömmliche Rasenmäher im Wesentlichen dem erfindungsgemäßen Rasenmäher der Fig. 1 bis 6, wobei zum leichteren Verständnis für identische oder funktionell gleiche Komponenten gleiche Bezugszeichen verwendet sind und insoweit auf die Erläuterungen zu den Fig. 1 bis 6 verwiesen werden kann. Insbesondere kann das Mähergehäuse 3 im Wesentlichen baugleich für die beiden Mäherausführungen verwendet werden, etwaige Modifikationen können die Unterbringung des Verbrennungsmotors und zugehöriger Peripheriekomponenten wie Vergaser etc. und eine optionale Verbrennungsmotorkühlung statt der Kühlluftführung 6 betreffen. Das Gebläse 7 fehlt bei diesem herkömmlichen Rasenmäher ebenso wie die Kühlluftführung 6, und der Antriebsriemen ist ungefähr dort an die Antriebswelle des Verbrennungsmotors 1' angekoppelt, an der beim erfindungsgemäßen Rasenmäher der Fig. 1 bis 6 das Gebläse 7 an die Antriebswelle 1a des Elektromotors angekoppelt ist.

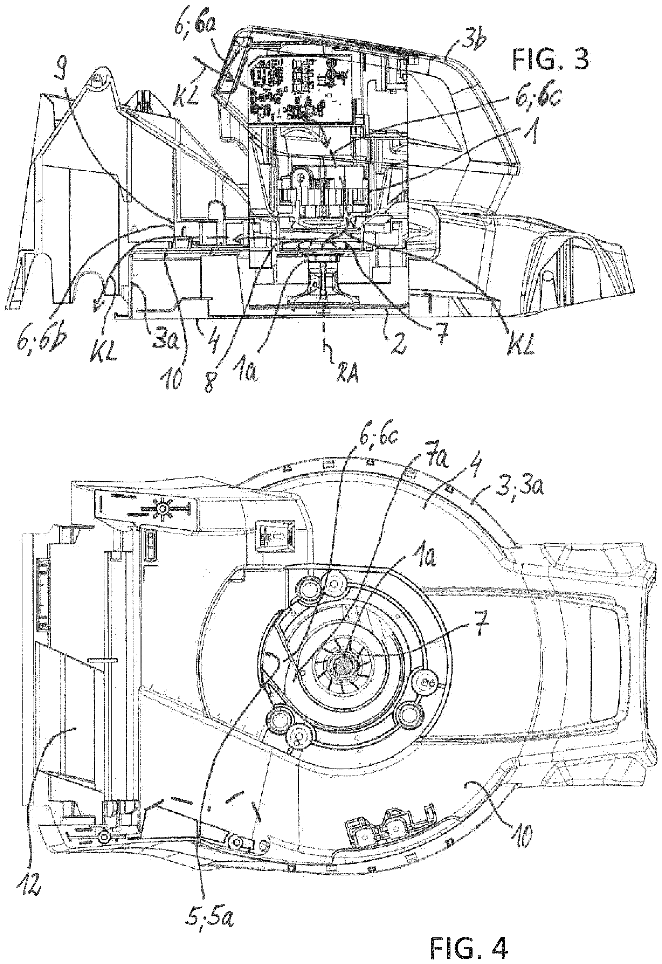

Wie aus den Fig. 1 bis 6 ersichtlich, beinhaltet der erfindungsgemäße Rasenmäher eine Kühlluftführung 6 im Mähergehäuse 3 mit einem Lufteinlass 6a, einem Luftauslass 6b und einem Luftführungsweg 6c vom Lufteinlass 6a zum Luftauslass 6b. Im Luftführungsweg 6c ist ein vom Elektromotor 1 antreibbares Gebläse 7 angeordnet, wobei der Riemenraum 5 einen Teil des Luftführungsweges 6c bildet. Durch die Kühlluftführung 6 kann Kühlluft längs des Luftführungsweges 6c vom Lufteinlass 6a zum Luftauslass 6b als ein Kühlluftstrom geführt werden, wie er in den Fig. 1 und 3 durch eine gestrichelte Strömungsverlaufslinie KL schematisch angedeutet ist.

Wie im gezeigten Beispiel und in den Fig. 1 und 2 ersichtlich, kann der Rasenmäher mit einem herkömmlichen Schnittgut-Auffangbehälter 11 ausgestattet sein, der lösbar am Mähergehäuse 3 angebracht werden kann und in den ein vom Mähdeck 3a umgrenzter, das gemähte Schnittgut führender Mähkanal 12 mündet. Dabei ist der Mähkanal 12 getrennt vom Riemenraum 5 in diesem unteren Teil des Mähergehäuses 3 ausgebildet. Im gezeigten Beispiel ist der Rasenmäher als ein vom Benutzer über eine nicht dargestellte Führungsstange handgeführter Rasenmäher mit zwei Hinterrädern 13 und zwei Vorderrädern 14 ausgeführt.

In vorteilhaften Realisierungen des Rasenmähers erstreckt sich, wie im gezeigten Beispiel, der Riemenraum 5 von einem Antriebswellenbereich 8 des Mähergehäuses 3 zu einem Radantriebsbereich 9 des Mähergehäuses 3. Folglich führt der durch den Riemenraum 5 gebildete Teil des Luftführungsweges 6c entsprechend vom Antriebswellenbereich 8 des Mähergehäuses 3 zum Radantriebsbereich 9 des Mähergehäuses 3. Der Antriebswellenbereich 8 ist hierbei derjenige Bereich des Mähergehäuses 3, in welchem sich die Antriebswelle 1a des Antriebsmotors 1 befindet, während der Radantriebsbereich 9 derjenige Bereich des Mähergehäuses 3 ist, in welchem sich ein über den Antriebsriemen mit der Antriebswelle 1a des Antriebsmotors 1 gekoppelter Radantrieb befindet, wenn der Verbrennungsmotor als Antriebsmotor 1 benutzt wird. Im gezeigten Beispiel befindet sich der Radantriebsbereich 9 in einem hinteren Teil des Mähergehäuses 3, so dass in diesem Fall durch den Radantrieb die Hinterräder 13 des Rasenmähers angetrieben werden können, wodurch der Rasenmäher selbstfahrend ausgeführt ist und nicht vom Benutzer geschoben werden braucht. In der Bestückung mit dem Elektromotor kann der Rasenmäher ebenfalls selbstfahrend realisiert sein, indem beispielsweise ein vom Antriebsmotor 1 für das Schneidwerkzeug separater, zusätzlicher Elektromotor im Radantriebsbereich 9 angeordnet wird.

In vorteilhaften Ausführungsformen sind, wie im gezeigten Beispiel, das Gebläse 7 und das Schneidwerkzeug 2 koaxial an der Antriebswelle 1a angeordnet, d.h. beide sitzen gemeinsam auf der Antriebswelle 1a, wobei im gezeigten Beispiel das Gebläse 7 zwischen dem Motorkörper des Antriebsmotors 1 und dem Schneidwerkzeug 2 angeordnet ist. Das Gebläse 7 kann beispielsweise an der Stelle an die Antriebswelle 1a angekoppelt sein, an welcher der dann im Riemenraum 5 aufgenommene Antriebsriemen an die Antriebswelle 1a angekoppelt ist, wenn der Rasenmäher mit dem Verbrennungsmotor statt dem Elektromotor als Antriebsmotor 1 bestückt ist.

In vorteilhaften Realisierungen ist das Gebläse 7, wie im gezeigten Beispiel, ein Radialgebläse mit zur Antriebswelle 1a des Antriebsmotors 1 paralleler Gebläserotationsachse, so dass die Kühlluft den Bereich des Gebläses 7 im Wesentlichen senkrecht zur Gebläserotationsachse verlässt. Wie z.B. aus Fig. 4 ersichtlich, besitzt das Gebläse 7 in diesem Fall ein Gebläsegehäuse, das sich mit einem trichterförmigen Bereich 7a radial nach außen weitet und dann in den Riemenraum 5 mündet.

In vorteilhaften Ausführungsformen erstreckt sich der Riemenraum 5, wie im gezeigten Beispiel, im Wesentlichen parallel zu einer Rotationsebene des Schneidwerkzeugs 2, d.h. senkrecht zu einer Rotationsachse RA des Schneidwerkzeugs 2. Dies bedeutet, dass sich in diesem Fall auch der vom Riemenraum 5 gebildete Teil des Luftführungsweges 6c parallel zur Rotationsebene des Schneidwerkzeugs 2 erstreckt.

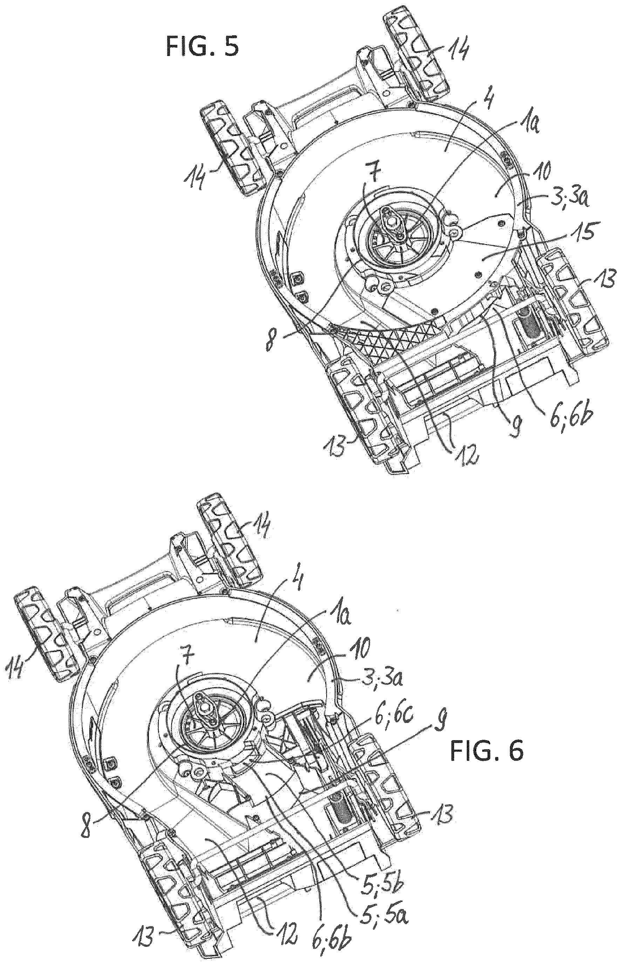

In vorteilhaften Realisierungen erstreckt sich der Riemenraum 5 angrenzend an eine Haubendachseite 10 des Mähdecks 3a. Im gezeigten Beispiel erstreckt sich der Riemenraum 5 speziell angrenzend an die Oberseite der Haubendachseite 10 des Mähdecks 3a vom Antriebswellenbereich 8 des Mähergehäuses 3 nach hinten zum im hinteren Teil des Mähergehäuses 3 befindlichen Radantriebsbereich 9 des Mähergehäuses 3. Dabei ist der Riemenraum 5 nach unten gegenüber der offenen Mähseite 4 durch eine abnehmbare Abdeckung 15 separiert, die einen entsprechenden Teil der Haubendachseite 10 des Mähdecks 3a bildet. In Fig. 5 ist die Abdeckung 15 montiert zu erkennen, Fig. 6 zeigt die gleiche Ansicht mit abgenommener Abdeckung 15. In der Ansicht von Fig. 6 ist zu erkennen, wie der Riemenraum 5 mit einem antriebswellenseitigen Endbereich 5a vom trichterförmigen Bereich 7a des Gebläsegehäuses abführt und mit einem kanalförmigen Bereich 5b den entsprechenden Teil des Luftführungsweges 6c der Kühlluftführung 6 bildet.

In vorteilhaften Ausführungen befinden sich der Lufteinlass 6a und der Luftauslass 6b, wie im gezeigten Beispiel der Fig. 1 bis 6, außerhalb des Mähdecks 3a. Für viele Anwendungen ist es dabei günstig, wenn sich der Lufteinlass 6a, wie im gezeigten Beispiel, an einem oberen Bereich des Mähergehäuses 3 befindet. Ebenso ist es für zahlreiche Anwendungsfälle günstig, wenn sich der Luftauslass 6b hierbei, wie im gezeigten Beispiel, an einem unteren hinteren Bereich des Mähergehäuses 3 außerhalb des Mähdecks 3a befindet. Speziell kann sich der Luftauslass 6b hierbei am entsprechenden radantriebsseitigen Ende des Riemenraums 5 befinden, d.h. die Kühlluft gelangt am Ende des Riemenraums 5 über den dortigen Luftauslass 6b aus dem Mähergehäuse 3 hinaus nach außen. Alternativ kann sich der Luftauslass 6b z.B. an einem unteren vorderen Bereich des Mähergehäuses 3 außerhalb des Mähdecks 3a befinden, insbesondere wenn der Mäher bei Bestückung mit dem Verbrennungsmotor einen Vorderradantrieb besitzt, der über den dann angeordneten Antriebsriemen an die Antriebswelle 1a des Antriebsmotors 1 angekoppelt ist.

In entsprechenden Ausführungsformen weist das Mähergehäuse 3, wie im gezeigten Beispiel der Fig. 1 bis 6, ein am Mähdeck 3a angeordnetes Motorgehäuse 3b auf, in dem der Antriebsmotor 1 angeordnet ist. Im gezeigten Beispiel ist das Motorgehäuse 3b lösbar auf das Mähdeck 3a aufgesetzt und kann von diesem bei Bedarf abgenommen werden.

Für den Einsatz des Verbrennungsmotors statt des Elektromotors kann das Mähergehäuse 3 bzw. das Motorgehäuse 3b je nach Bedarf daran angepasst modifiziert gestaltet sein, um in ihm den Verbrennungsmotor anstelle des Elektromotors anzuordnen. Weiter versteht es sich, dass das Mähergehäuse 3 bzw. das Motorgehäuse 3b angepasst an den Einsatz des Verbrennungsmotors bzw. des Elektromotors dafür eingerichtet sein kann, Mittel zur entsprechenden Energieversorgung des Antriebsmotors 1 aufzunehmen, wie einen zugehörigen Akkupack bzw. eine andere elektrische Energieversorgung für den Elektromotor oder einen Benzintank für den Verbrennungsmotor.

Im gezeigten Ausführungsbeispiel der Fig. 1 bis 6 befindet sich der Lufteinlass speziell am oberen, hinteren Bereich des Motorgehäuse 3b, während sich der Luftauslas 6b an einem unteren, hinteren Teil des Mähergehäuses 3 befindet, der unterseitig das Mähdeck 3a bildet und in dem der Riemenraum 5 ausgebildet ist.

Wie das gezeigte und die weiteren oben erläuterten Ausführungsbeispiele deutlich machen, stellt die Erfindung einen motorbetriebenen Rasenmäher zur Verfügung, der ein Mähergehäuse mit einem haubenförmigen Mähdeck und einem außerhalb des Mähdecks gebildeten Riemenraum aufweist und bei dem sich das Mähergehäuse baugleich sowohl für eine Ausführung des Rasenmähers mit dem Verbrennungsmotor als Antriebsmotor als auch für eine Ausführung des Rasenmähers mit dem Elektromotor als Antriebsmotor verwenden lässt, wobei in dem Mähergehäuse eine Kühlluftführung insbesondere zur Kühlung des Elektromotors gebildet ist, zu dessen Luftführungsweg der Riemenraum beiträgt, ohne dass in diesem Fall der Antriebsriemen in dem Riemenraum aufgenommen ist.

## Patentansprüche

1. Motorbetriebener Rasenmäher, mit
- einem Antriebsmotor (1) mit einer Antriebswelle (1a),
- einem vom Antriebsmotor (1) antreibbaren, beweglichen Schneidwerkzeug (2),
- einem Mähergehäuse (3) mit einem haubenförmigen Mähdeck (3a), das zu einer Mähseite (4) hin offen ist und innerhalb dessen das Schneidwerkzeug (2) angeordnet ist, wobei das Mähergehäuse zur Verwendung mit einem motorbetriebenen Rasenmäher mit einem Verbrennungsmotor als Antriebsmotor eingerichtet ist, indem im Mähergehäuse (3) außerhalb des Mähdecks (3a) ein Riemenraum (5) vorgesehen ist, der zur Aufnahme eines mit einer Antriebswelle des Verbrennungsmotors verbundenen Antriebsriemens eingerichtet ist, **dadurch gekennzeichnet, dass**
- der Antriebsmotor (1) ein Elektromotor ist,
- im Mähergehäuse (3) eine Kühlluftführung (6) mit einem Lufteinlass (6a), einem Luftauslass (6b) und einem Luftführungsweg (6c) vom Lufteinlass (6a) zum Luftauslass (6b) gebildet ist und
- ein vom Elektromotor (1) antreibbares Gebläse (7) im Luftführungsweg (6c) angeordnet ist und
- der Riemenraum (5) zur Bildung eines Teils des Luftführungsweges (6c) eingerichtet ist.

2. Motorbetriebener Rasenmäher nach Anspruch 1, weiter **dadurch gekennzeichnet, dass** sich der Riemenraum (5) von einem Antriebswellenbereich (8) des Mähergehäuses (3) zu einem Radantriebsbereich (9) des Mähergehäuses (3) erstreckt.

3. Motorbetriebener Rasenmäher nach Anspruch 1 oder 2, weiter **dadurch gekennzeichnet, dass** sich der Riemenraum (5) im Wesentlichen parallel zu einer Rotationsebene des Schneidwerkzeugs (2) erstreckt.

4. Motorbetriebener Rasenmäher nach einem der Ansprüche 1 bis 3, weiter **dadurch gekennzeichnet, dass** sich der Riemenraum (5) angrenzend an eine Haubendachseite (10) des Mähdecks (3a) erstreckt

5. Motorbetriebener Rasenmäher nach einem der Ansprüche 1 bis 4, weiter **dadurch gekennzeichnet, dass** sich der Lufteinlass (6a) und der Luftauslass (6b) außerhalb des Mähdecks (3a) befinden.

6. Motorbetriebener Rasenmäher nach einem der Ansprüche 1 bis 5, weiter **dadurch gekennzeichnet, dass** sich der Lufteinlass (6a) an einem oberen Bereich des Mähergehäuses (3) befindet.

7. Motorbetriebener Rasenmäher nach einem der Ansprüche 1 bis 6, weiter **dadurch gekennzeichnet, dass** sich der Luftauslass (6b) an einem unteren hinteren oder unteren vorderen Bereich des Mähergehäuses (3) außerhalb des Mähdecks (3a) befindet.

8. Motorbetriebener Rasenmäher nach einem der Ansprüche 1 bis 7, weiter **dadurch gekennzeichnet, dass** das Gebläse (7) und das Schneidwerkzeug (2) koaxial an der Antriebswelle (1a) angeordnet sind.

9. Motorbetriebener Rasenmäher nach einem der Ansprüche 1 bis 8, weiter **dadurch gekennzeichnet, dass** das Mähergehäuse (3) ein am Mähdeck (3a) angeordnetes Motorgehäuse (3b) aufweist, in dem der Antriebsmotor (1) angeordnet ist.

10. Verwendung eines Mähergehäuses (3) mit einem haubenförmigen Mähdeck (3a), das zu einer Mähseite (4) hin offen ist und innerhalb dessen ein Schneidwerkzeug (2) angeordnet ist, für einen Rasenmäher,
- wobei das Mähergehäuse (3) zur Verwendung mit einem motorbetriebenen Rasenmäher mit einem Verbrennungsmotor als Antriebsmotor eingerichtet ist, indem im Mähergehäuse (3) außerhalb des Mähdecks (3a) ein Riemenraum (5) vorgesehen ist, der zur Aufnahme eines mit einer Antriebswelle des motorbetriebenen Rasenmähers verbundenen Antriebsriemens eingerichtet ist, **dadurch gekennzeichnet, dass**
- das Mähergehäuse (3) zur Verwendung mit einem motorbetriebenen Rasenmäher mit einem Elektromotor als Antriebsmotor (1) eingerichtet ist,
- im Mähergehäuse (3) eine Kühlluftführung (6) mit einem Lufteinlass (6a), einem Luftauslass (6b) und einem Luftführungsweg (6c) vom Lufteinlass (6a) zum Luftauslass (6b) gebildet ist,
- ein vom Antriebsmotor (1) antreibbares Gebläse (7) im Luftführungsweg (5c) anordenbar ist und
- der Riemenraum (5) zur Bildung eines Teils des Luftführungsweges (6c) eingerichtet ist.

11. Verwendung nach Anspruch 10, weiter **dadurch gekennzeichnet, dass** der motorbetriebene Rasenmäher mit dem Elektromotor als Antriebsmotor (1) ein solcher nach einem der Ansprüche 1 bis 9 ist.
